# EUROPEAN PATENT SPECIFICATION

(11) **EP 1 633 033 B1**
(45) Date of publication and mention of the grant of the patent: **17.10.2007**
(21) Application number: 05107799.8
(22) Date of filing: 25.08.2005
(51) Int. Cl.: H02K 5/22

(54) **Connector module and motor utilizing the same**
Verbindermodul und Motor ausgestattet mit diesem
Module connecteur et moteur pourvu d'un tel module

(30) Priority: 06.09.2004 CN 200410068768
(43) Date of publication of application: 08.03.2006
(73) Proprietor: Delta Electronics, Inc., Taoyuan Hsien 333 (TW)
(72) Inventor: Yang, Chun-Hua, 333, Toayuan Hsien (TW); Hsu, Jin-Ju, 333, Toayuan Hsien (TW)
(74) Representative: Blasberg, Tilo

(56) References cited:
- EP-A- 0 551 113
- EP-A- 0 831 012
- US-A- 4 836 792
- US-A- 6 099 324
- US-A1- 2002 149 283

## Description

### BACKGROUND

The invention relates to a connector module, and in particular to a connector module applied in a motor.

Connectors comprise any connecting element and auxiliary thereof for electronic messages and external power supply. Connectors act as bridges for transferring messages, and thus, quality of the connectors affects reliability of current and message transmission and performance of the entire electronic device.

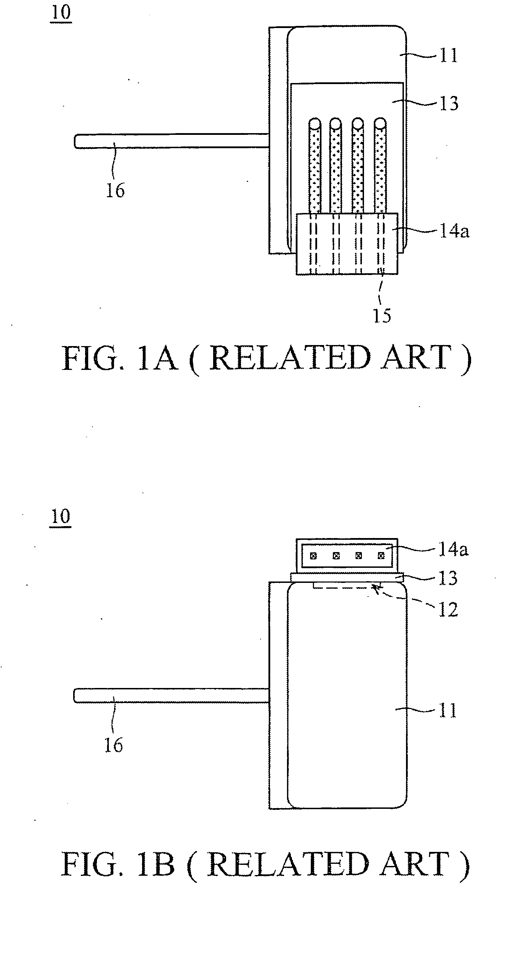

With respect to electronic devices such as motors, connectors are used as interfaces to electrically connect the motors to external devices such as external power supplies to actuate rotation of a shaft. Fig. 1A is a top view of a conventional interface used in a motor, and Fig. 1B is a side view of Fig. 1A. As shown in Figs 1A and 1B, at an input port of the motor 10, a printed wiring board (PWB) 13 is disposed above an opening 12 of a cover 11, and a connector 14a is installed or welded on the printed wiring board 13. A plurality of circuit lines are distributed on the printed wiring board 13 to connect the motor 10 and the connector 14a.

There are a lot of different types of connectors used to different external devices for electrical connection and various interface specifications. However, the interface pitch of each type of connector is fixed; that is, the pitch is unchangeable according to different interface specification, thus, usable range is limited.

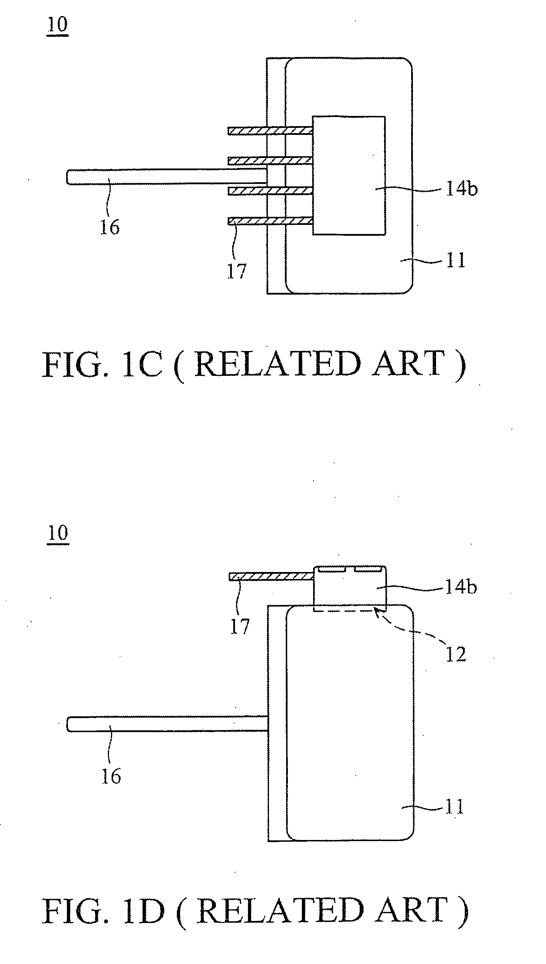

Fig. 1C is a top view of another conventional interface used in a motor. Fig. 1D is a side view of Fig. 1C. In another design, the connector is directly installed or welded at an input port of the motor 10. That is, a connector 14b is directly disposed at an opening 12 of a cover 11. One end of the connector 14b is connected to the motor 10, and the other end of the connector 14b having a plurality of pins or longitudinal terminals 17 for connecting to external devices such as an external power supply to actuate rotation of a shaft 16. However, such design with unique specification requirements is more complicated and expensive, it may be difficult to find on the market.

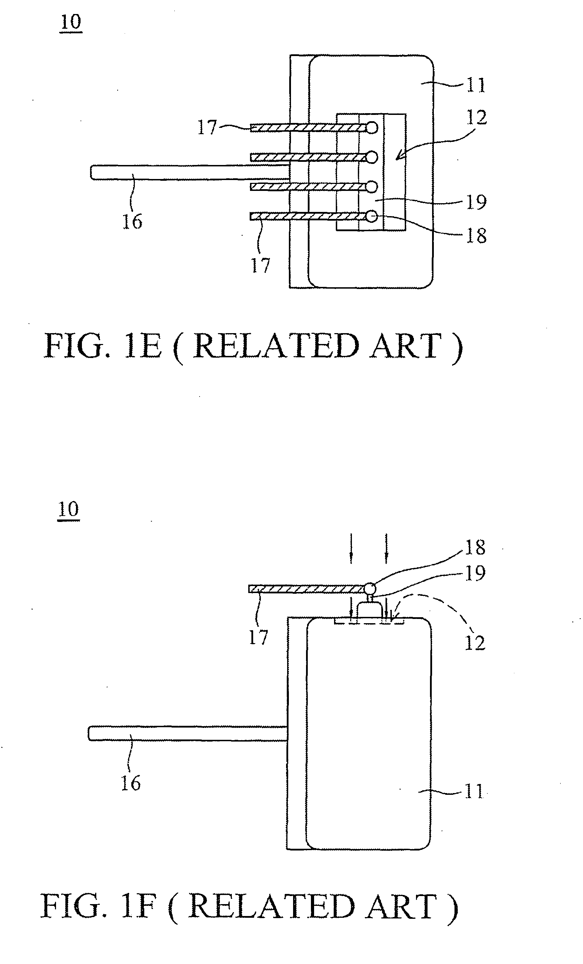

In addition, Fig. 1E is a top view of yet another conventional interface used in a motor, and Fig. 1F is a side view of Fig. 1E. As shown in Figs. 1E and 1F, the printed wiring board and complicated connector are simplified. Several pins or longitudinal terminals 17 are directly welded at an input port 19 of the motor 10. However, during a welding process, the pins or longitudinal terminals 17 are welded onto the input port 19 protruding at an opening 12 of the cover 12, but the interior of the motor 10 is exposed to outside through the opening 12. Thus, tin residue or other foreign particles may enter the interior of the motor 12 through the opening 10 during the welding process, possibly interfering with normal operation of the motor.

US 4,836,792 discloses a connector module according to the preamble of claim 1. The connector module comprises a printed circuit board (PCB) and a connector and is configured for electrically connecting to a motor. Pads of the printed circuit board are connected by a solder connection to a conductor and the conductor is then adapted to be attached to the connector. The pads cannot be adjusted.

US 6,099,324 discloses an electrical motor unit having first contacts for mating with an electrical connector and second contacts that are pluggably matable with electrical circuitry of a brush housing. Neither the first contacts nor the second contacts are adjustable to an external device.

US 2002/0149283 A1 discloses an electrical motor comprising a printed circuit board, a connector plug and connecting bridges. The connecting bridges of the connector plug are connected to the printed circuit board either by soldering or by being pressed in. Thus, the connecting bridges are not adjustable.

EP 0 551 113 A2 discloses an actuator comprising a wiring board and a connector. Terminals provided on the connector connect with terminals formed on the wiring board by soldering. The locations of the terminals on the wiring board are therefore fixed. Furthermore, the wiring board and the connector have to be replaced as a unit, which is not convenient.

EP 0 831 012 A2 discloses a motor-assisted power steering apparatus includes a DC motor, which is fixed to a heat conductive frame, a torque sensor and a control circuit. The brush support can be made from a printed board.

### SUMMARY

It is an object of the present invention to provide a connector module for electrically connecting a motor and an external device that is more convenient during use, in particular during assembly. It is another object of the present invention to provide an electric motor comprising such a connector module.

The above objects are achieved by a connector module with the features according to claim 1 and by a motor according to claim 3. Further advantageous embodiments are the subject-matter of the dependent claims.

### BRIEF DESCRIPTION OF THE DRAWINGS

The invention can be more fully understood by reading the subsequent detailed description in conjunction with the examples and references made to the accompanying drawings, wherein:
Fig. 1A is a top view of a conventional interface used in a motor;
Fig. 1B is a side view of the conventional interface of Fig. 1A;
Fig. 1C is a top view of another conventional interface used in a motor;
Fig. 1D is a side view of the conventional interface of Fig. 1C;
Fig. 1E is a top view of yet another conventional interface used in a motor;
Fig. 1F is a side view of the conventional interface of Fig. 1E;
Fig. 2A is a top view of an embodiment of a connector module and a motor utilizing the same;
Fig. 2B is a side view of the connector module and a motor utilizing the same;
Fig. 3 is a top view of another embodiment of a connector module and a motor utilizing the same.

### DETAILED DESCRIPTION

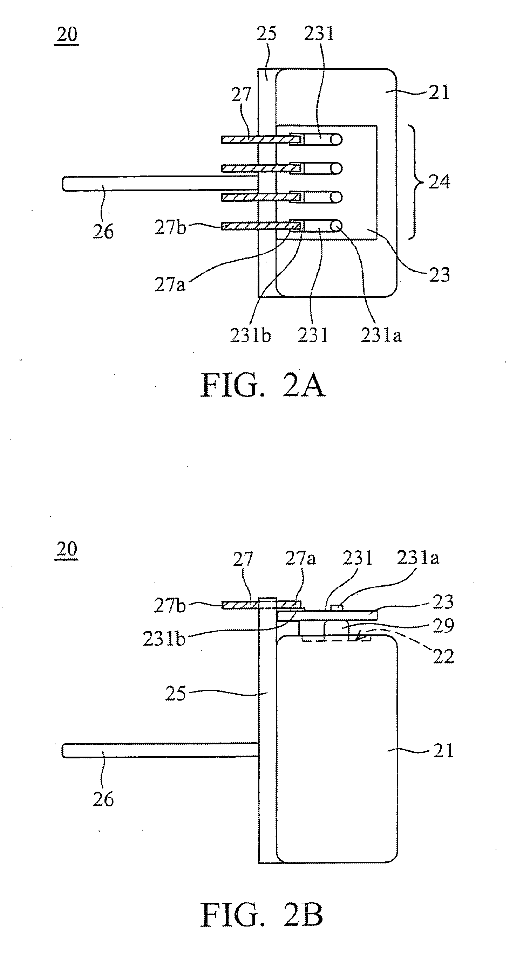

Fig. 2A is a top view of an embodiment of a connector module and a motor utilizing the same. Fig. 2B is a side view of the connector module and the motor utilizing the same. The motor 20 is connected to an external device via a connector module 24. The external device can be an external power supply to actuate rotation of a shaft 26 of the motor 20. For example, rotation of the shaft 26 can be designed to actuate an indicator of an odometer on a display of a vehicle.

The motor 20 includes an input port 29 and the connector module 24. The connector module 24 includes a printed wiring board (PWB) 23 and several pins 27 or longitudinal terminals. The printed wiring board 23, of an insulating material, includes at least one circuit line 231, each of which has a first terminal 231a and a second terminal 231b opposite thereto. Each pin 27 has a first end 27a and a second end 27b opposite thereto. The first terminals 231a of the circuit lines 231 are electrically connected to an input port 29 of the motor 20. The second terminals 231b of the circuit lines 231 are electrically connected to the first ends 27a of the pin 27 separately, and the second ends 27b of the pins 27 are electrically connected to the external device separately. Thus, the input port 29 of the motor 20 can be electrically connected to external devices via the circuit lines 231 and pins 27 on the printed wiring board 23.

The motor 20 has a cover 21 with an opening 22 therein such that the input port 29 penetrates through the opening 22 and out of the cover 21 to electrically connect to the first terminals 231a of the circuit lines 231. The invention does not limit connecting methods between the second terminals 231b of the circuit lines 231 and the first ends 27a of the pins 27. In an embodiment, the second terminals 231b and the first ends 27a can be separately connected by welding. The connecting positions of the second terminals 231b of the circuit lines 231 and the first ends 27a of the pins 27 are determined and controlled by a jig. As the result, the pitch between the pins 27 is obtained in accordance with the positions of the second terminals 231b of the circuit lines 231. Therefore, the pitch or size of the pins 27 can be adjusted according to required interfaces, varying with the position of the second terminals of the circuit lines.

The printed wiring board 23 is disposed above the opening 22, having a size greater than or equal to a size of the opening 22. Thus, the opening 22 is blocked by the printed wiring board 23. Therefore, tin residue or other foreign particles do not enter the interior of the motor 12 during a welding process.

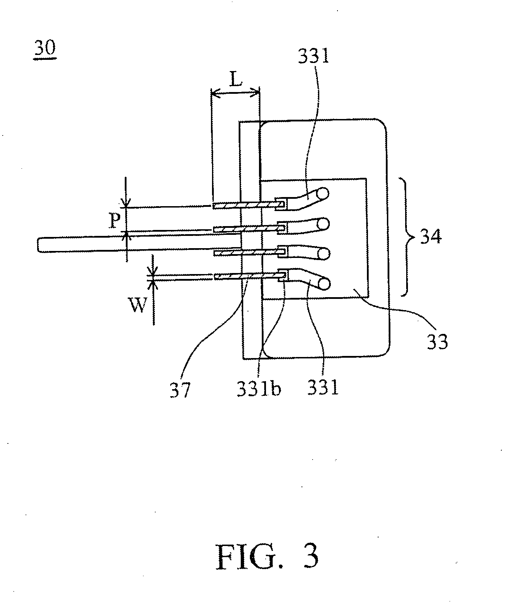

Fig. 3 is another top view of a connector module and a motor utilizing the same according to the invention. As external devices change, positions of the second terminals of the circuit lines can be modified according to the required interfaces for adapting different connectors. Thus, the invention can be easily applied with flexibility.

As shown in Fig. 3, a motor 30 is connected to an external device via a connector module 34. In this embodiment, the interface specification of the external device connected to the motor 30 is different from that of the other external device connected to the connector module 34. Thus, positions of the second terminals 331b of the circuit line 231s are separately adjusted in according to the requirements such that the pitch "P" between the pins 37 is able to conform to the external device. That is, layout on the printed wiring board can be changed by modifying the pitch between pins 37, length L, and width W of the pins 37 such that different interfaces can be efficiently achieved, providing flexible space in the connector modules 24 and 34 and the invention is in widespread use.

Moreover, the motor 20 further includes a supporting portion 25, as shown in Figs. 2A and 2B. The shaft 26 passes through a center of the supporting portion 25, and the supporting portion 25 acts as a bottom portion of the motor cover 21. The supporting portion 25 includes an insulating material, such as plastic. Moreover, the supporting portion 25 extends outwardly such that the side of the printed wiring board 23 abuts the supporting portion 25, and the supporting portion 25 can support the printed wiring board 23 and allow the pins 27 to penetrate therethrough. As a result, the pins 27 are positioned on the printed wiring board 23.

In conclusion, the connector module including a printed wiring board and pins is designed in a simple structure to substitute for conventional connectors. The pins and the printed wiring board can be easily and massively produced, so the manufacturing costs thereof are greatly reduced. Thus, capital cost of the connector module is also cheaper than that of the conventional design including a printed wiring board and a conventional connector or using an independent complicated connector. Especially, with respect to a unique interface for connectors with unique specifications, the conventional design requires extra costs for remaking a model; however, the connector module of the invention can be easily modified without remaking models, and thus, saving extra modeling costs.

In addition, the connector module of the invention can be changed by varying layout on the printed wiring board and the pitch, length, and width of the pins to adapt to different interfaces and connectors with special specifications. Thus, application of the connector module of the invention is simple with high flexibility, reducing costs for connectors with special specifications.

## Claims

1. A connector module for electrically connecting a motor and an external device, comprising:
a printed wiring board (23), comprising a plurality of circuit lines (231), each of said circuit lines comprising a first terminal (231a) and a second terminal (231b) opposite thereto; and
a plurality of pins (27), each of the pins comprising a first end (27a) and a second end (27b) opposite thereto;
wherein the first terminals (231a) of the circuit lines are configured to be electrically connected to an input port (29) of the motor, the second terminals (231b) of the circuit lines are separately connected to the first ends of the pins, and the second ends (27b) of the pins are configured to be electrically connected to the external device, **characterized in that** positions of the second terminals (231b) of the circuit lines are adjustable according to various interfaces.

2. The connector module as claimed in claim 1, wherein the adjustable positions of the second terminals (231b) of the circuit lines are controlled by a jig, and a pitch between the pins (27) is obtained in accordance with the positions of the second terminals of the circuit lines.

3. A motor, electrically connected to an external device, comprising:
an input port (29); and
a connector module (24) comprising:
a printed wiring board (23), comprising a plurality of circuit lines (231), each of said circuit lines comprising a first terminal (231a) and a second terminal (231b) opposite thereto; and
a plurality of pins (27), each of the pins comprising a first end (27a) and a second end (27b) opposite thereto;
wherein the first terminals (231a) of the circuit lines are configured to be electrically connected to an input port (29) of the motor, the second terminals (231b) of the circuit lines are separately connected to the first ends of the pins, and the second ends (27b) of the pins are configured to be electrically connected to the external device, **characterized in that** positions of the second terminals (231b) of the circuit lines are adjustable according to various interfaces such that the motor (20) is electrically connected to the external device by the connector module.

4. The motor as claimed in claim 3, wherein the motor (20) comprises a cover (21) with an opening (22) therein, and the input port penetrates the opening of the cover to electrically connect to the external device.

5. The motor as claimed in claim 4, wherein the printed wiring board (23) is disposed above the opening, and the printed wiring board has a size greater than or equal to a size of the opening.

6. The motor as claimed in any of claims 3 to 5, wherein the second terminals (231b) of the circuit lines and the first ends (27a) of the pins are separately connected by welding.

7. The motor as claimed in any of claims 3 to 6, wherein the motor further comprises a supporting portion (25), acting as a bottom portion of the motor.

8. The motor as claimed in claim 7, wherein one side of the printed wiring board (23) abuts the supporting portion (25), so that the supporting portion supports the printed wiring board and allows the pins (27) to penetrate therethrough and be positioned thereon.

9. The motor as claimed in claim 7 or 8, wherein the supporting portion (25) comprises an insulating material.

10. The motor as claimed in any of claims 7 to 9, wherein the motor actuates an indicator of an odometer of a vehicle.

11. The motor as claimed in claim 3, wherein the adjustable positions of the second terminals (231b) of the circuit lines are controlled by a jig, and a pitch between the pins (27) is obtained in accordance with the positions of the second terminals of the circuit lines.

## Patentansprüche

1. Verbinder- bzw. Steckermodul zum elektrischen Verbinden eines Motors mit einem externen Gerät, umfassend:
eine Leiterplatine (23), die eine Mehrzahl von Schaltungsleitungen bzw. -bahnen (231) umfasst, wobei jede der Schaltungsleitungen einen ersten Anschluss (231a) und einen diesem gegenüber liegenden zweiten Anschluss (231b) aufweist; und
eine Mehrzahl von Kontaktstiften (27), wobei jeder der Kontaktstifte ein erstes Ende (27a) und ein diesem gegenüber liegendes zweites Ende (27b) aufweist;
wobei die ersten Anschlüsse (231 a) der Schaltungsleitungen ausgelegt sind, um mit einem Eingangsanschluss (29) des Motors elektrisch verbunden zu werden, die zweiten Anschlüsse (231b) der Schaltungsleitungen gesondert mit den ersten Enden der Kontaktstifte verbunden sind und die zweiten Enden (27b) der Kontaktstifte ausgelegt sind, um mit dem externen Gerät elektrisch verbunden zu werden, **dadurch gekennzeichnet, dass** Positionen der zweiten Anschlüsse (231b) der Schaltungsleitungen in Entsprechung zu unterschiedlichen Schnittstellen anpassbar sind.

2. Verbinder- bzw. Steckermodul nach Anspruch 1, wobei die anpassbaren Positionen der zweiten Anschlüsse (231 b) der Schaltungsleitungen durch eine Schablone bzw. Lehre gesteuert bzw. vorgegeben sind und ein Abstand zwischen den Kontaktstiften (27) in Entsprechung zu den Positionen der zweiten Anschlüsse der Schaltungsleitungen erhalten wird.

3. Motor, der elektrisch leitend mit einem externen Gerät verbunden ist, umfassend:
einen Eingangsanschluss (29); und
ein Verbinder- bzw. Steckermodul (24), das umfasst:
eine Leiterplatine (23), die eine Mehrzahl von Schaltungsleitungen bzw. -bahnen (231) umfasst, wobei jede der Schaltungsleitungen einen ersten Anschluss (231a) und einen diesem gegenüber liegenden zweiten Anschluss (231b) aufweist; und
eine Mehrzahl von Kontaktstiften (27), wobei jeder der Kontaktstifte ein erstes Ende (27a) und ein diesem gegenüber liegendes zweites Ende (27b) aufweist;
wobei die ersten Anschlüsse (231a) der Schaltungsleitungen ausgelegt sind, um mit einem Eingangsanschluss (29) des Motors elektrisch verbunden zu werden, die zweiten Anschlüsse (231b) der Schaltungsleitungen gesondert mit den ersten Enden der Kontaktstifte verbunden sind und die zweiten Enden (27b) der Kontaktstifte ausgelegt sind, um mit dem externen Gerät elektrisch verbunden zu werden, **dadurch gekennzeichnet, dass** Positionen der zweiten Anschlüsse (231b) der Schaltungsleitungen in Entsprechung zu unterschiedlichen Schnittstellen anpassbar sind, so dass der Motor (20) durch das Verbinder- bzw. Steckermodul mit dem externen Gerät elektrisch verbunden ist.

4. Motor nach Anspruch 3, wobei der Motor (20) eine Abdeckung (21) mit einer darin vorgesehenen Öffnung (22) aufweist und der Eingangsanschluss in die Öffnung der Abdeckung hineinragt, um das externe Gerät zu verbinden bzw. anzuschließen.

5. Motor nach Anspruch 4, wobei die Leiterplatine (23) oberhalb der Öffnung angeordnet ist und die Größe der Leiterplatine größer oder gleich der Größe der Öffnung ist.

6. Motor nach einem der Ansprüche 3 bis 5, wobei die zweiten Anschlüsse (231 b) der Schaltungsleitungen und die ersten Enden (27a) der Kontaktstifte durch Schweißen gesondert miteinander verbunden sind.

7. Motor nach einem der Ansprüche 3 bis 6, wobei der Motor weiterhin einen Halterungsabschnitt (25) umfasst, der als Bodenabschnitt des Motors wirkt.

8. Motor nach Anspruch 7, wobei eine Seite der Leiterplatine (23) an dem Halterungsabschnitt (25) anliegt, so dass der Halterungsabschnitt die Leiterplatine trägt und die Kontaktstifte (27) diese durchdringen und auf dieser positioniert werden können.

9. Motor nach Anspruch 7 oder 8, wobei der Halterungsabschnitt (25) ein isolierendes Material umfasst.

10. Motor nach einem der Ansprüche 7 bis 9, wobei der Motor eine Anzeige eines Kilometerzählers eines Fahrzeugs treibt.

11. Motor nach Anspruch 3, wobei die anpassbaren Positionen der zweiten Anschlüsse (231 b) der Schaltungsleitungen mit Hilfe einer Schablone bzw. Lehre gesteuert bzw. vorgegeben werden und ein Abstand zwischen den Kontaktstiften (27) in Entsprechung zu den Positionen der zweiten Anschlüsse der Schaltungsleitungen erhalten wird.

## Revendications

1. Module de connecteur pour connecter électriquement un moteur et un dispositif externe, comprenant :
une carte de câblage imprimé (23), comprenant une pluralité de lignes de circuit (231), chacune desdites lignes de circuit comprenant une première borne (231a) et une deuxième borne (231b) à l'opposé l'une de l'autre ; et
une pluralité de broches (27), chacune des broches comprenant une première extrémité (27a) et une deuxième extrémité (27b) à l'opposé l'une de l'autre ;
dans lequel les premières bornes (231a) des lignes de circuit sont configurées pour être électriquement connectées à un port d'entrée (29) du moteur, les deuxièmes bornes (231b) des lignes de circuit sont séparément connectées aux premières extrémités des broches, et les deuxièmes extrémités (27b) des broches sont configurées pour être électriquement connectées au dispositif externe, **caractérisé en ce que** les positions des deuxièmes bornes (231b) des lignes de circuit sont ajustables selon diverses interfaces.

2. Module de connecteur selon la revendication 1, dans lequel les positions ajustables des deuxièmes bornes (231b) des lignes de circuit sont contrôlées par un gabarit, et un pas entre les broches (27) est obtenu en fonction des positions des deuxièmes bornes des lignes de circuit.

3. Moteur connecté électriquement à un dispositif externe, comprenant :
un port d'entrée (29) ; et
un module de connecteur (24) comprenant :
une carte de câblage imprimé (23), comprenant une pluralité de lignes de circuit (231), chacune desdites lignes de circuit comprenant une première borne (231a) et une deuxième borne (231b) à l'opposé l'une de l'autre ; et
une pluralité de broches (27), chacune des broches comprenant une première extrémité (27a) et une deuxième extrémité (27b) à l'opposé l'une de l'autre ;
dans lequel les premières bornes (231a) des lignes de circuit sont configurées pour être électriquement connectées à un port d'entrée (29) du moteur, les deuxièmes bornes (231b) des lignes de circuit sont séparément connectées aux premières extrémités des broches, et les deuxièmes extrémités (27b) des broches sont configurées pour être électriquement connectées au dispositif externe, **caractérisé en ce que** les positions des deuxièmes bornes (231b) des lignes de circuit sont ajustables selon diverses interfaces de manière à ce que le moteur (20) soit électriquement connecté au dispositif externe par le module de connecteur.

4. Moteur selon la revendication 3, dans lequel le moteur (20) comprend un capot (21) avec une ouverture (22) dans celui-ci, et le port d'entrée pénètre l'ouverture du capot pour se connecter électriquement au dispositif externe.

5. Moteur selon la revendication 4, dans lequel la carte de câblage imprimé (23) est disposée au-dessus de l'ouverture, et la carte de câblage imprimé a une taille supérieure ou égale à la taille de l'ouverture.

6. Moteur selon l'une quelconque des revendications 3 à 5, dans lequel les deuxièmes bornes (231b) des lignes de circuit et les premières extrémités (27a) des broches sont séparément connectées par soudure.

7. Moteur selon l'une quelconque des revendications 3 à 6, dans lequel le moteur comprend en outre une portion de support (25), agissant comme une portion de bas du moteur.

8. Moteur selon la revendication 7, dans lequel un côté de la carte de câblage imprimé (23) s'aboute contre la portion de support (25), de manière à ce que la portion de support supporte la carte de câblage imprimé et permette aux broches (27) de pénétrer à travers celle-ci et d'être positionnées sur celle-ci.

9. Moteur selon la revendication 7 ou 8, dans lequel la portion de support (25) comprend un matériau isolant.

10. Moteur selon l'une quelconque des revendications 7 à 9, dans lequel le moteur actionne un indicateur d'un compteur kilométrique d'un véhicule.

11. Moteur selon la revendication 3, dans lequel les positions ajustables des deuxièmes bornes (231b) des lignes de circuit sont contrôlées par un gabarit, et un pas entre les broches (27) est obtenu en fonction des positions des deuxièmes bornes des lignes de circuit.
